# EUROPÄISCHE PATENTSCHRIFT

(11) **EP 3 497 383 B1**
(45) Veröffentlichungstag und Bekanntmachung des Hinweises auf die Patenterteilung: **13.05.2020**
(21) Anmeldenummer: 17758267.3
(22) Anmeldetag: 09.08.2017
(51) Int. Cl.: F25B 17/08, F25D 11/00, F25D 11/02

(54) **TRANSPORTBEHÄLTER**
TRANSPORT CONTAINER
CONTENANT DE TRANSPORT

(30) Priorität: 09.08.2016 AT 3672016
(43) Veröffentlichungstag der Anmeldung: 19.06.2019
(60) Teilanmeldung: 20020106.9
(73) Patentinhaber: REP IP AG, 6317 Oberwil bei Zug (CH)
(72) Erfinder: ROS, Nico, 4125 Riehen (CH)
(74) Vertreter: Keschmann, Marc
(86) Internationale Anmeldenummer: PCT/IB2017/000940
(87) Internationale Veröffentlichungsnummer: WO 2018/029521

(56) Entgegenhaltungen:
- WO-A1-92/13244
- DE-A1- 3 412 556
- DE-B- 1 262 306
- DE-U1-202015 101 481
- JP-A- S5 932 771
- JP-A- 2005 299 974
- US-A- 1 729 082
- US-A1- 2002 189 279

## Beschreibung

Die Erfindung betrifft einen Transportbehälter zum Transport von temperaturempfindlichem Transportgut umfassend eine Kammer zur Aufnahme des Transportguts, eine die Kammer umschließende Hülle und wenigstens ein Kühlelement zum Temperieren der Kammer, wobei das Kühlelement umfasst:
- ein Verdunstungselement mit einer Kühlfläche,
- ein Trocknungsmittel zur Aufnahme von im Verdunstungselement verdunstetem Kühlmittel,
- eine Transportstrecke zum Transport des verdunsteten Kühlmittels zum Trocknungsmittel,
- eine mit dem Verdunstungselement in Fluidverbindung bringbare Vorratskammer für das Kühlmittel, wobei Mittel
   zum Verdampfen von im Trocknungsmittel gespeichertem Kühlmittel vorgesehen sind und dass das Trocknungsmittel zum Transport des verdampften Kühlmittels zur Vorratskammer mit dieser verbunden ist.

Beim Transport von temperaturempfindlichem Transportgut, wie z.B. Arzneimitteln, über Zeiträume von mehreren Stunden oder Tagen müssen vorgegebene Temperaturbereiche bei der Lagerung und dem Transport eingehalten werden, um die Verwendbarkeit und die Sicherheit des Arzneimittels zu gewährleisten. Für verschiedene Arzneimittel sind Temperaturbereiche von 2 bis 25°C, insbesondere 2 bis 8°C als Lager- und Transportbedingungen festgeschrieben.

Der gewünschte Temperaturbereich kann oberhalb oder unterhalb der Umgebungstemperatur liegen, sodass entweder eine Kühlung oder eine Beheizung des Innenraums des Transportbehälters erforderlich ist. Wenn sich die Umgebungsbedingungen während eines Transportvorgangs ändern, kann die erforderliche Temperierung sowohl ein Kühlen als auch ein Beheizen umfassen. Damit der gewünschte Temperaturbereich beim Transport permanent und nachweislich eingehalten wird, werden Transportcontainer mit besonderem Isolationsvermögen eingesetzt. Diese Container werden mit passiven oder aktiven Temperierelementen ausgestattet. Passive Temperierelemente erfordern während der Anwendung keine externe Energiezufuhr, sondern nützen ihre Wärmespeicherkapazität, wobei es je nach Temperaturniveau zu einer Abgabe oder einer Aufnahme von Wärme an den bzw. aus dem zu temperierenden Transportbehälterinnenraum kommt. Solche passiven Temperierelemente sind jedoch erschöpft, sobald der Temperaturausgleich mit dem Transportbehälterinnenraum abgeschlossen ist.

Eine besondere Form von passiven Temperierelementen sind Latentwärmespeicher, die thermische Energie in Phasenwechselmaterialien speichern können, deren latente Schmelzwärme, Lösungswärme oder Absorptionswärme wesentlich größer ist als die Wärme, die sie aufgrund ihrer normalen spezifischen Wärmekapazität speichern können. Nachteilig bei Latentwärmespeichern ist der Umstand, dass sie ihre Wirkung verlieren, sobald das gesamte Material den Phasenwechsel vollständig durchlaufen hat. Durch Ausführen des gegenläufigen Phasenwechsels kann der Latentwärmespeicher jedoch wieder aufgeladen werden.

Aktive Temperierelemente benötigen für Ihren Betrieb eine externe Energiezufuhr. Sie beruhen auf der Umwandlung einer nicht-thermischen Energieform in eine thermische Energieform. Die Abgabe oder Aufnahme von Wärme erfolgt dabei zum Beispiel im Rahmen eines thermodynamischen Kreisprozesses, wie z.B. mittels einer Kompressionskältemaschine. Eine andere Ausbildung von aktiven Temperierelementen arbeitet auf Grundlage des thermoelektrischen Prinzips, wobei sog. Peltier-Elemente eingesetzt werden.

Die für die Temperierung eines Transportcontainers erforderliche Energie muss somit in Form eines elektrischen Speichers oder eines thermischen Speichers mitgeführt werden. Dabei spielt insbesondere bei Transportcontainern für die Luftfracht nicht nur das Volumen, sondern auch das Gewicht und die Bewilligungsfähigkeit des Temperierungssystems samt Energiespeicher eine große Rolle. Die heute vorhandenen Kühlsysteme haben oft ein großes Gewicht im Verhältnis zur Dämmung. Das hohe Gewicht bei passiven Kühlsystemen rührt von der limitierten Enthalpie her, denn diese liegt in den nutzbaren Temperaturbereichen von 2-8°C, 15-25°C und 34-38°C bei ca. 200kJ/kg. Die Energiedichte von für aktive Kühlsysteme erforderlichen Akkumulatoren ist grundsätzlich größer als 200 kJ/kg, jedoch beträgt die höchstzulässige Energiedichte für den Transport in Flugzeugen ca. 180kJ/kg.

Das Dokument DE 34 12 556 A1 offenbart einen Transportbehälter gemäß dem Oberbegriff des Anspruchs 1. Aus der WO 02/099345 A1 ist ein Transportcontainer bekannt geworden, welcher mit einem als Sorptionskühlsystem ausgebildeten passiven Temperierelement ausgestattet ist. Das Kühlsystem umfasst ein Verdunstungselement mit einer Kühlfläche, ein Trocknungsmittel zur Aufnahme von im Verdunstungselement verdudunstetem Kühlmittel, eine Transportstrecke zum Transport des verdunsteten Kühlmittels zum Trocknungsmittel und eine mit dem Verdunstungselement in Fluidverbindung bringbare Vorratskammer für das Kühlmittel. Als Kühlmittel wird beispielsweise Wasser eingesetzt, wobei die für die Verdunstung des Kühlmittels erforderliche Wärmemenge dem zu kühlenden Transportgut entzogen und dieses auf diese Art und Weise gekühlt wird. Ein solches Kühlsystem ist kostengünstig und weist ein geringes Volumen und ein geringes Gewicht auf. Bereits eine vergleichsweise geringe Menge des mitgeführten Kühlmittels reicht aus, um hohe Kühlleistungen zu erzielen, weil für die Verdunstung von Flüssigkeiten hohe Energiemengen erforderlich sind, welche deutlich höher sind als jene des Phasenüberganges festflüssig. Die benötigte Energie, um Wasser zu verdunsten, beträgt bei 8°C ca. 2.500kJ/kg. Die absolute Wassermenge, welche Luft oder ein Gas bzw. Gasgemisch aufnehmen kann (100% relative Luftfeuchte), hängt stark von der Temperatur ab. Bei einer Temperatur von 30°C kann 1m³ Luft 30gr Wasser aufnehmen, bei einer Temperatur von 5°C hingegen kann 1m³ Luft nur ca. 7gr aufnehmen. Die Verdunstungsgeschwindigkeit und damit die Kühlleistung können durch folgende Parameter reguliert werden: die Wasserzufuhr je Zeiteinheit, die Größe der Verdunstungsoberfläche und die relative Wassersättigung des umgebenden Gases. Um eine geringe Wassersättigung des umgebenden Gases zu erreichen, wird das mit dem verdunsteten Wasser beladene Gas zu einem Trocknungsmittel geleitet, welches das Wasser adsorbiert. Das Trocknungsmittel befindet sich hierbei an derjenigen Seite des Kühlelements, auf der Wärme abgeben werden soll, die Verdunstungsschicht befindet sich auf der Seite des Kühlelements, auf welcher gekühlt werden soll.

Nachteilig bei dem in der WO 02/099345 A1 beschriebenen Kühlsystem ist, dass keine Kühlung mehr stattfindet, sobald das Wasser verbraucht oder die Sättigung des Trocknungsmittels erreicht ist. Die Kühlung kann nur wieder in Gang gesetzt werden, wenn neue Kühlflüssigkeit und ein neues Trocknungsmittel eingesetzt werden. Bei großen Transportcontainern ist dies jedoch sehr aufwändig und daher nicht zweckmäßig. Um beispielsweise einen Schiffscontainer 30 Tage lang zu kühlen, benötigt man ca. 18Wh/K. Bei 25K Differenz ist eine Kühlleistung von 18Wh/K*25K = 450Wh erforderlich. Das reine Verdunsten von Wasser benötigt ca. 694Wh/kg, zusammen mit dem Trocknungsmittel kommt man auf eine Energiedichte für das System von ca. 347Wh/kg. Somit sind für die autonome Kühlung eines Schiffscontainers während einer Dauer von 30 Tagen ca. 500kg Wasser und 500kg Trocknungsmittel erforderlich. Ein Diesel-Aggregat wäre im Übrigen deutlich weniger gewichtseffizient. Dieses benötigt ca. 2-3 Liter Diesel pro Stunde, was einen Dieseltank von min. 1.440 Liter erforderlich machen würde. Weiters muss das Gewicht des Aggregates selbst sowie der Instandhaltung- und Wartungsaufwand berücksichtigt werden.

Die Erfindung zielt daher darauf ab, einen Transportcontainer der eingangs genannten Art mit einem verbesserten Kühlsystem auszustatten. Insbesondere soll das Kühlsystem dahingehend verbessert werden, dass das Transportgut bei gleichem Gewicht des Kühlsystems über eine längere Transportzeit hinweg in einem vordefinierten Temperaturbereich gehalten bzw. ohne Reduzierung der maximal möglichen Transportzeit eine Reduzierung des Gewichts und/oder des Volumens des Kühlsystems erreicht werden kann.

Zur Lösung dieser Aufgabe sieht die Erfindung bei einem Transportbehälter der eingangs genannten Art im Wesentlichen vor, dass die Mittel zum Verdampfen des Kühlmittels eine Vakuumpumpe umfassen, die in einer das Trocknungsmittel und die Vorratskammer verbindenden Leitung angeordnet ist. Auf diese Weise kann das Kühlelement wieder aufgeladen werden. Im Zuge des Kühlvorganges wird die Kühlflüssigkeit, insbesondere das Wasser verdunstet, gelangt in das Trocknungsmittel und wird dort gebunden. Das Wiederaufladen erfolgt dadurch, dass die Kühlflüssigkeit aus dem Trocknungsmittel rekuperiert und der Vorratskammer rückgeführt wird, wobei das Trocknungsmittel die darin gebundene Kühlflüssigkeit dadurch abgibt, dass diese zum Verdampfen gebracht wird. Die Mittel zum Verdampfen des Kühlmittels können weiters eine Heizeinrichtung umfassen. Die Heizeinrichtung ist beispielsweise ausgebildet, um das Trocknungsmittel auf mindestens 120°C, vorzugsweise auf ca. 160-200°C zu erwärmen. Zu diesem Zweck kann bevorzugt vorgesehen sein, dass die Heizeinrichtung sich durch das Trocknungsmittel erstreckende Heizschlangen umfasst. Die Heizeinrichtung kann bevorzugt elektrisch betrieben sein.

Die Erfindung ermöglicht somit die Verwirklichung eines geschlossenen Kreislaufs für das Kühlmittel.

Das verdunstete Kühlmittel wird bevorzugt am Weg zur Vorratskammer kondensiert und im flüssigen Zustand in die Vorratskammer geleitet. Eine erfindungsgemäße Ausführung sieht in diesem Zusammenhang vor, dass eine das Trocknungsmittel und die Vorratskammer verbindende Leitung zum Transport des verdampften Kühlmittels vorgesehen ist. Die das Trocknungsmittel und die Vorratskammer verbindende Leitung weist vorzugsweise wenigstens einen mäanderförmigen Abschnitt auf, welcher als Kondensator dient.

Das Lösen der Flüssigkeit aus dem Trocknungsmittel erfolgt durch Druckabsenkung durch das Erzeugen eines Vakuums. Zwischen der Vorratskammer und dem Trocknungsmittel wird eine Vakuumpumpe eingesetzt, welche einen Unterdruck im Trocknungsmittel erzeugt, wodurch die gebundene Flüssigkeit verdunstet wird. Am Weg zur Vorratskammer kann der Druck im Bereich des Kondensators erhöht werden, um den Dampf zu verflüssigen. Der höhere Druck hält die Kühlflüssigkeit in der Vorratskammer in flüssiger Form.

Während des Kühlvorganges ist die Verbindung zwischen dem Verdunstungselement und dem Trocknungsmittel geöffnet, während die für das Wiederaufladen vorgesehene Verbindung zwischen dem Trocknungsmittel und der Vorratskammer vorzugsweise geschlossen ist. Für das Aufladen des Kühlelements wird die Verbindung zwischen dem Trocknungsmittel und der Vorratskammer geöffnet und die Verbindung zwischen dem Verdunstungselement und dem Trocknungsmittel vorzugsweise geschlossen. In konstruktiver Hinsicht ist daher bevorzugt vorgesehen, dass in der Transportstrecke zum Transport des verdunsteten Kühlmittels zum Trocknungsmittel wenigstens ein Absperrorgan angeordnet ist. Weiters ist in der das Trocknungsmittel und die Vorratskammer verbindenden Leitung bevorzugt wenigstens ein Absperrorgan angeordnet.

Die Absperrorgane können als Ventile ausgebildet sein, wobei die Ventile thermisch oder elektrisch bzw. mechanisch gesteuert werden können. Die Steuerung kann dabei so ablaufen, dass die Erwärmung des Trocknungsmittels während des laufenden Kühlprozesses begonnen wird und dass die Verbindung zwischen dem Verdunstungselement und dem Trocknungsmittel unterbrochen wird, nachdem das Trocknungsmittel beispielsweise 100°C erreicht hat, wobei die Verbindung des Trocknungsmittels mit dem Kondensator bzw. der Vorratskammer vorzugsweise gleichzeitig oder wenig später geöffnet wird.

Die Aufladung kann beispielswiese in einem Hafen oder an einer anderen Stelle erfolgen, an der eine Stromversorgung vorhanden ist. Für eine vollständige Trocknung bzw. Aufladung eines Systems mit 500kg Trocknungsmittel sind ca. 350kWh erforderlich, was bei einer Stromzufuhr von 400V/32A mittels einer CEE Verbindung ca. 28-35 Std. benötigt.

Die Variante mit Vakuumpumpe oder Heizung in Kombination mit einer Vakuumpumpe ist deutlich energieeffizienter. Bei gleicher Verdunstungskühlleistung kann der Energieverbrauch für das Rekuperieren der Kühlflüssigkeit aus dem Trocknungsmittel um ca. 70-80% reduziert werden.

Das Kühlelement kann auf verschiedene Art und Weise in den Transportbehälter integriert werden. Beispielsweise kann das Verdunstungselement als Schicht einer schichtartig aufgebauten Wand des Transportbehälters ausgebildet sein. Das Verdunstungselement kann so entweder in eine Wand oder in mehrere Wände des Behälters integriert werden. Bevorzugt bildet das Verdunstungselement hierbei die innerste, die zu temperierende Kammer begrenzende Schicht der jeweiligen Wand. Die Verdunstungselemente bzw. -schichten der einzelnen Wände können über wenigstens einen Kanal mit dem Trocknungsmittel verbunden sein, wobei das Trocknungsmittel vorzugsweise lediglich an oder in einer der Wände des Transportbehälters integriert oder auf diese außen aufgesetzt ist.

Alternativ kann das Kühlelement (umfassend das Verdunstungselement, das Trocknungsmittel und die Vorratskammer für Kühlflüssigkeit) auch in einem eigenen externen Gehäuse untergebracht sein, das bei Bedarf am Transportbehälter befestigt wird. Die zu temperierende Kammer des Transportbehälters und das in dem externen Gehäuse angeordnete Verdunstungselement müssen dann über geeignete Kanäle mit einander verbunden werden, damit die Luft umgewälzt werden kann.

Der erfindungsgemäße Transportcontainer ist auch für die Luftfracht sehr interessant, da das System für die Kühlung während des Transports keinen elektrischen Strom bzw. keine Batterien benötigt, es jedoch mit elektrischem Strom oder/und "Kälte" teilweise bzw. voll geladen werden kann.

Im Zeitraum der Aufladung des Kühlelements ist die Kühlung nicht in Betrieb, wobei eine bevorzugte Ausführung der Erfindung vorsieht, dass ein zweites Kühlsystem angeordnet ist, welches ausgebildet ist, um die Kammer, in welcher das Transportgut aufgenommen ist, während des Aufladens des Verdunstungskühlelements zu kühlen. Bevorzugt umfasst der Transportbehälter zu diesem Zweck einen Latentwärmespeicher, der mit der Kammer in Wärmeaustauschverbindung steht.

Der Latentwärmespeicher kann dabei nicht nur zur Überbrückung des Aufladezeitraums des Verdunstungskühlsystems verwendet werden, sondern kann auch gleichzeitig mit diesem betrieben werden, wodurch sich eine Reihe von weiteren Vorteilen ergibt. Die Leistung des Verdunstungskühlsystems kann reduziert werden, sodass dieses kleinbauender und mit weniger Gewicht ausgeführt werden kann. Die Gesamtkühlleistung kann zwischen dem Verdunstungskühlsystem und dem Latentwärmespeicher aufgeteilt werden. Das Kühlsystem kann so ausgelegt werden, dass dann, wenn die Leistung des Verdunstungskühlsystems nicht mehr ausreicht und sich die Temperatur der Kammer erhöht, die zusätzliche Kühlleistung vom Latentwärmespeicher bezogen wird, welcher Energie für den Phasenübergang von fest zu flüssig benötigt.

Das Kühlsystem kann in bevorzugter Weise so ausgebildet sein, dass die Phasenübergangstemperatur (fest zu flüssig) des Latentwärmespeichers niedriger gewählt ist als die sich aus der Kühlleistung des Verdunstungskühlsystems ergebende Temperatur. Mit dem Verdunstungskühlsystem kann die Temperatur der Kammer bevorzugt auf eine Temperatur von 12-20°C reduziert werden, wobei die weitere Abkühlung auf eine Temperatur im Bereich von 2-8°C mit Hilfe des Latentwärmespeichers vorgenommen wird. Durch diese Kombination kann beim Trocknungsmittel des Verdunstungskühlsystems mit einer höheren relativen Luftfeuchte gearbeitet werden, wodurch die Trocknungsmittelmenge reduziert werden kann. Auch die Menge des Latentwärmespeichers kann dabei reduziert werden, da dieser nur die Energie für die Kühlung vom Bereich von 12-20°C auf den Bereich von 2-8°C zur Verfügung stellen muss.

Ein weiterer Vorteil liegt darin, dass bei einem teilgeladenen (d.h. nicht vollständig kristallisierten) Latentwärmespeicher dieser genutzt werden kann, um die Kammer gegen Unterkühlung zu schützen bzw. innerhalb des gewünschten Temperaturbereichs von z.B. 2-8°C zu halten, wenn die Außentemperatur unter das Niveau des gewünschten Temperaturbereichs absinkt.

Bei einer bevorzugten Ausbildung, bei welcher das Transportgut in der Kammer in einem Temperaturbereich von 2-8°C gehalten werden soll, ist der Latentwärmespeicher mit einer Phasenübergangstemperatur von ca. 4-6°C ausgebildet.

Wenn der Transportcontainer für längere Zeit (z.B. mehrere Tage) in einem Kühlhaus gelagert wird (z.B. in einem Zolllager), z.B. bei einer Temperatur von 2-8°C, und das Verdunstungskühlsystem auf eine Kühlleistung zur Erreichung einer über der im Kühlhaus herrschenden Temperatur liegenden Temperatur eingestellt ist, ist das Verdunstungskühlsystem während der Lagerzeit nicht aktiv, sodass kein Kühlmittel verbraucht wird. Des weiteren kann der Zeitraum der Lagerung genutzt werden, um den Latentwärmespeicher aufzuladen, was im Kühlhaus bei einer Temperatur von z.B. unter 6°C automatisch passiert, wenn die Phasenübergangstemperatur des Latentwärmespeichers bei 6°C liegt. Dadurch kann bei minimaler Auslegung der beiden Systeme (Latentwärmespeicher und Verdunstungskühlsystem) eine längere Nutzungs- bzw. Transportdauer des Transportcontainers erreicht werden als wenn lediglich ein Kühlsystem alleine verwendet würde.

Ein weiterer Vorteil ergibt sich dann, wenn das Verdunstungskühlsystem mehr Kühlleistung zur Verfügung stellt als erforderlich. Die überschüssige Kühlleistung kann dann dazu genutzt werden, um den Latentwärmespeicher wieder aufzuladen, d.h. in den festen bzw. kristallisierten Zustand zurückzuführen.

Eine bevorzugte Ausbildung der Erfindung sieht vor, dass das Verdunstungskühlsystem und der Latentwärmespeicher kaskadierend angeordnet sind, d.h. dass in Richtung von außen nach innen des Transportcontainers gesehen zuerst das Verdunstungskühlsystem wirksam ist und dann der Latentwärmespeicher. Die Kühlfläche des Verdunstungselements steht daher mit dem Latentwärmespeicher in Wärmeaustauschverbindung und der Latentwärmespeicher steht mit der Kammer in Wärmeaustauschverbindung. Dies kann in konstruktiver Hinsicht vorzugsweise dadurch realisiert werden, dass der Latentwärmespeicher zwischen der Kühlfläche und der Kammer angeordnet ist.

Wenn die Kühlleistung des Verdunstungskühlsystems auf eine über der Phasenübergangstemperatur des Latentwärmespeichers liegende Temperatur eingestellt ist, sieht eine bevorzugte Ausbildung vor, dass die Kühlfläche und der Latentwärmespeicher durch eine thermische Isolation voneinander getrennt sind. Die Kühlfläche des Verdunstungselements und der Latentwärmespeicher stehen dann zwar in Wärmeaustauschverbindung miteinander, jedoch ist der Wärmeaustausch durch die thermische Isolation deutlich verlangsamt, sodass sich ein entsprechender Temperaturgradient ergibt.

Um eine sichere Funktionsweise des Verdunstungskühlsystems zu gewährleisten, wobei die relative Luftfeuchtigkeit unabhängig von der Umgebung geregelt werden kann, ist bevorzugt vorgesehen, dass das Verdunstungskühlelement gegenüber der Umgebung dampfdiffusionsdicht abgeschlossen ist. Das verdunstete Kühlmittel wird somit vollständig im Trocknungsmittel adsorbiert, wobei über die Einstellung der in der Gasatmosphäre des Verdunstungskühlsystems herrschenden relativen Feuchte die Kühlleistung in einfacher Weise festgelegt werden kann.

Weiters ist bevorzugt vorgesehen, dass das Verdunstungselement und das Trocknungsmittel durch eine thermische Isolation voneinander getrennt sind. Die thermische Isolation kann als zwischen dem Verdunstungselement und dem Trocknungsmittel angeordnete Isolationsschicht ausgebildet sein, wobei die Isolationsschicht als Transportstrecke zum Transport des verdunsteten Kühlmittels zum Trocknungsmittel genutzt werden kann. Eine bevorzugte Ausbildung sieht in diesem Zusammenhang vor, dass die thermische Isolation zwischen dem Verdunstungselement und dem Trocknungsmittel eine dampfdiffusionsoffene Isolationsschicht umfasst, welche die Transportstrecke ausbildet.

Alternativ kann die Transportstrecke wenigstens einen sich zwischen dem Verdunstungselement und dem Trocknungsmittel erstreckenden Kanal umfassen.

Als Trocknungsmittel eignen sich besonders gut Silicagele. Diese sind kostengünstig und können bis zu 60% ihres Eigengewichtes an Flüssigkeit, insbesondere Wasser aufnehmen.

Das Verdunstungselement umfasst mit Vorteil ein das Kühlmittel, insbesondere Wasser, aufnehmendes Textil, insbesondere einen Filz. Grundsätzlich ist jedes Material geeignet, das eine große Oberfläche aufweist.

Hinsichtlich des Latentwärmespeichers ist ein solcher bevorzugt, dessen Phasenwechsel im Temperaturbereich der gewünschten Temperierung durch den Übergang zwischen fest und flüssig bzw. umgekehrt gekennzeichnet ist. Bevorzugte Phasenübergangsmaterialien umfassen Paraffine und Salzmischungen, wie z.B. RT5 der Firma Rubitherm oder Produkte der Firma Sasol.

Besonders bevorzugt weist der Latentwärmespeicher eine Phasenübergangstemperatur von 3-10°C, insbesondere 5°C, auf, wodurch die Kammer für das Transportgut in einfacher Weise in einem Temperaturbereich von 2-8°C gehalten werden kann.

Der Latentwärmespeicher kann bevorzugt als plattenförmiges Element ausgebildet sein. Eine vorteilhafte Ausbildung ergibt sich, wenn das plattenförmige Element eine Vielzahl von insbesondere wabenförmigen Hohlkammern aufweist, die mit dem Latentwärmespeichermaterial gefüllt sind, wobei ein Wabenstrukturelement gemäß der WO 2011/032299 A1 besonders vorteilhaft ist.

Eine besonders effiziente Temperierung wird gemäß einer bevorzugten Ausführung erreicht, wenn der Latentwärmespeicher die Kammer allseitig umgibt. Weiters kann auch vorgesehen sein, dass die Kühlfläche des Verdunstungselements die Kammer allseitig umgibt.

In diesem Zusammenhang kann vorgesehen sein, dass der Latentwärmespeicher und das Verdunstungselement jeweils eine Schicht der Hülle des Transportbehälters ausbilden.

Der erfindungsgemäße Transportcontainer kann grundsätzlich in beliebigen Abmessungen realisiert werden.

Die Erfindung wird nachfolgend anhand von in der Zeichnung schematisch dargestellten Ausführungsbeispielen näher erläutert. In dieser zeigen Fig. 1 eine Ausbildung des Kühlsystems für einen erfindungsgemäßen Transportcontainer, Fig. 2 eine erste Ausbildung eines Transportcontainers mit einem solchen Kühlsystem und Fig. 3 eine zweite Ausbildung eines Transportcontainers mit einem solchen Kühlsystem.

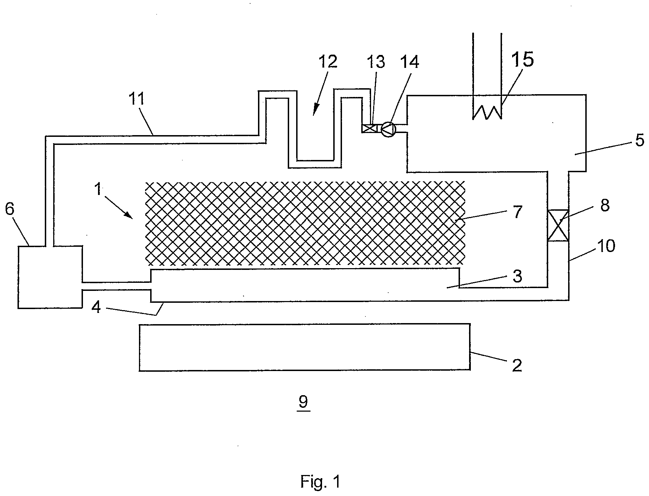

In Fig. 1 ist ein Kühlsystem dargestellt, das ein Verdunstungskühlsystem 1 sowie einen Latentwärmespeicher 2 umfasst. Das Verdunstungskühlsystem 1 umfasst ein Verdunstungselement 3, welches mit einem Kühlmittel, wie z.B. Wasser, getränkt ist und eine Kühlfläche 4 aufweist, und ein Trocknungsmittel 5 zur Aufnahme von im Verdunstungselement 3 verdunstetem Kühlmittel. Zur Versorgung des Verdunstungselements 3 mit Kühlmittel ist dieses mit einer Vorratskammer 6 verbunden. Der Transport des verdunsteten Kühlmittels vom Verdunstungselement 3 zum Trocknungsmittel 5 erfolgt über einen Kanal 10. Die gemeinsame Umhüllung bzw. Wandung des Verdunstungselements 3, des Kanals 10 und des Trocknungsmittels 5 ist gasdicht ausgeführt, damit die relative Luftfeuchtigkeit der Gasatmosphäre innerhalb des Verdunstungskühlsystems 1 unabhängig von der Umgebung geregelt werden kann. Das verdunstete Kühlmittel wird im Trocknungsmittel 5, welches z.B. von Silicagel gebildet ist, adsorbiert.

Das Trocknungsmittel 5 befindet sich hierbei an derjenigen Seite des Verdunstungskühlsystems 1, auf der Wärme abgeben werden soll und das Verdunstungselement 3 befindet sich auf derjenigen (gegenüberliegenden) Seite des Verdunstungskühlsystems 1, auf welcher gekühlt werden soll. Auf der wärmeabgebenden Seite des Verdunstungselements 3 ist eine thermische Dämmung 7 angeordnet.

Auf der Kühlseite des Verdunstungskühlsystems 1 ist ein plattenförmiger Latentwärmespeicher 2 angeordnet, der mit der Kühlfläche 4 des Verdunstungskühlsystems 1 entweder direkt oder unter Zwischenschaltung einer thermischen Isolierung (nicht gezeigt) in Wärmeaustauschverbindung steht. Auf der dem Verdunstungskühlsystem 1 abgewandten Seite des Latentwärmespeichers 2 ist die zu temperierende Kammer 9 angeordnet.

Im Kanal 10 ist ein Ventil 8 angeordnet, mit welchem die Verbindung zwischen dem Verdunstungselement 3 und dem Trocknungsmittel 5 geöffnet oder getrennt werden kann. Weiters ist ein Kanal 11 vorgesehen, der das Trocknungsmittel 5 mit der Vorratskammer 6 verbindet, um Kühlmittel, das aus dem Trocknungsmittel 5 durch Verdampfen rekuperiert wurde, in die Vorratskammer 6 zu leiten. Zum Verdampfen des Kühlmittels aus dem Trocknungsmittel 5 ist eine Vakuumpumpe 14 und ggf. eine Heizeinrichtung 15 angeordnet. Das verdampfte Kühlmittel gelangt in den Kanal 11 und durchläuft bei geöffnetem Ventil 13 den Kondensator 12, wo das Kühlmittel abgekühlt wird, sodass es der Vorratskammer 6 in flüssigem Zustand zugegeben wird.

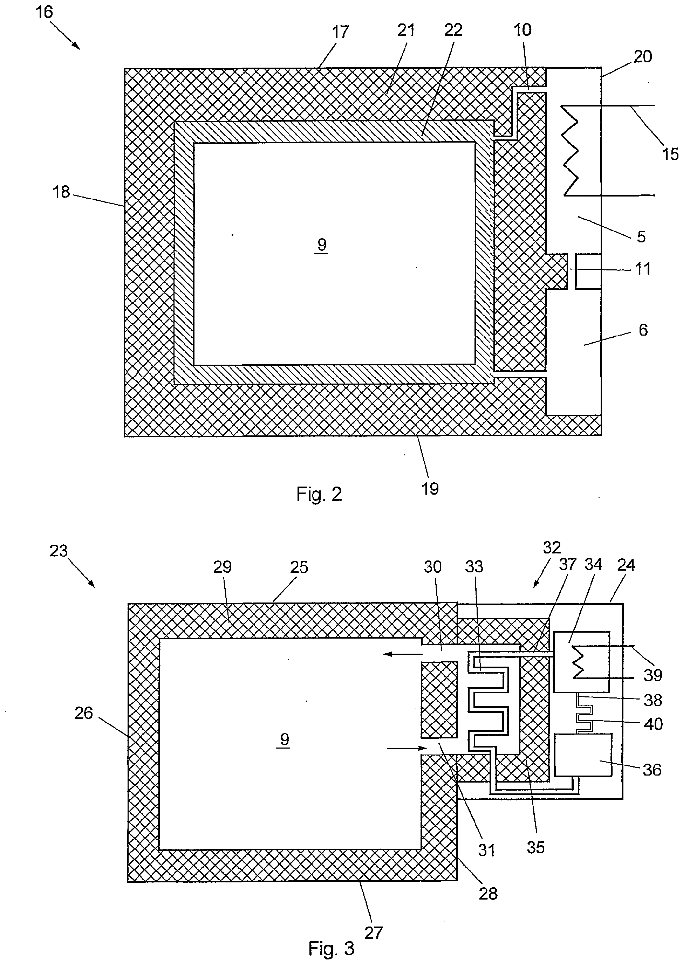

Fig. 2 zeigt einen quaderförmiger Transportbehälter 16 im Querschnitt, dessen Wände mit 17, 18, 19 und 20 bezeichnet sind. Die Wände 17, 18, 19 und 20 umfassen einen Schichtaufbau mit einer äußeren Dämmschicht 21 aus wärmedämmendem Material und einer inneren Schicht 22, welche das Verdunstungselement ausbildet. Das Verdunstungselement 22 ist über einen sich durch die Dämmschicht 21 erstreckenden Kanal 10 mit dem Trocknungsmittel 5 verbunden. Weiters ist ein Kanal 11 vorgesehen, der das Trocknungsmittel 5 mit der Vorratskammer 6 verbindet, um Kühlmittel, das aus dem Trocknungsmittel 5 durch Verdampfen rekuperiert wurde, in die Vorratskammer 6 zu leiten. Zum Verdampfen des Kühlmittels aus dem Trocknungsmittel 5 ist eine Heizeinrichtung 15 angeordnet. Das verdampfte Kühlmittel gelangt in den Kanal 11 und durchläuft bei geöffnetem Ventil (nicht dargestellt) einen Kondensator (nicht dargestellt), wo das Kühlmittel abgekühlt wird, sodass es der Vorratskammer 6 in flüssigem Zustand zugegeben wird. Die aus Trocknungsmittel, Kanal 11 und Vorratskammer 6 bestehende Einheit kann als vom Transportcontainer 16 demontierbare Einheit ausgebildet werden, um einen einfachen An- und Abbau sicherzustellen.

Bei der Ausbildung gemäß Fig. 3 ist die das Verdunstungselement, das Trocknungsmittel und die Vorratskammer umfassende Kühlvorrichtung in einem externen Gehäuse 24 untergebracht, das bei Bedarf an herkömmliche Transportcontainer angebaut werden kann. Fig. 3 zeigt einen quaderförmiger Transportbehälter 23 im Querschnitt, dessen Wände mit 25, 26, 27 und 28 bezeichnet sind. Die Wände 25, 26, 27 und 28 umfassen jeweils ein Dämmmaterial 29 aus wärmedämmendem Material. Die Wand 28 ist mit Öffnungen 30 und 31 versehen, wobei ein Ventilator dafür sorgt, dass die sich in der Kammer 9 des Behälters 23 befindende Luft umgewälzt wird, wobei die Luft über die Öffnung 31 zur Kühleinheit 32 geleitet und die dort gekühlte Luft über die Öffnung 31 in die Kammer 9 zurückgeführt wird. Die Kühleinheit 32 umfasst wiederum ein mäanderartig geformtes Verdunstungselement 33, ein Trocknungsmittel 34, ein dazwischen angeordnetes Dämmmaterial 35 und eine Vorratskammer 36 für Kühlflüssigkeit. Das Verdunstungselement 33 ist über einen sich durch die Dämmung 35 erstreckenden Kanal 37 mit dem Trocknungsmittel 34 verbunden. Weiters ist ein Kanal 38 vorgesehen, der das Trocknungsmittel 34 mit der Vorratskammer 36 verbindet, um Kühlmittel, das aus dem Trocknungsmittel 34 durch Verdampfen rekuperiert wurde, in die Vorratskammer 36 zu leiten. Zum Verdampfen des Kühlmittels aus dem Trocknungsmittel 34 ist eine Heizeinrichtung 39 angeordnet. Das verdampfte Kühlmittel gelangt in den Kanal 38 und durchläuft bei geöffnetem Ventil (nicht dargestellt) einen Kondensator 40, wo das Kühlmittel abgekühlt wird, sodass es der Vorratskammer 36 in flüssigem Zustand zugegeben wird.

## Patentansprüche

1. Transportbehälter zum Transport von temperaturempfindlichem Transportgut umfassend eine Kammer (9) zur Aufnahme des Transportguts, eine die Kammer (9) umschließende Hülle und wenigstens ein Kühlelement zum Temperieren der Kammer (9), wobei das Kühlelement umfasst:
- ein Verdunstungselement (3, 22, 33) mit einer Kühlfläche (4),
- ein Trocknungsmittel (5, 34) zur Aufnahme von im Verdunstungselement (3, 22, 33) verdunstetem Kühlmittel,
- eine Transportstrecke zum Transport des verdunsteten Kühlmittels zum Trocknungsmittel (5, 34),
- eine mit dem Verdunstungselement (3, 22, 33) in Fluidverbindung bringbare Vorratskammer (6, 36) für das Kühlmittel,
wobei Mittel zum verdampfen von im Trocknungsmittel (5, 34) gespeichertem Kühlmittel vorgesehen sind und dass das Trocknungsmittel (5, 34) zum Transport des verdampften Kühlmittels zur Vorratskammer (6, 36) mit dieser verbunden ist, **dadurch gekennzeichnet, dass** die Mittel zum Verdampfen des Kühlmittels eine Vakuumpumpe (14) umfassen, die in einer das Trocknungsmittel (5,34) und die Vorratskammer (6,36) verbindenden Leitung angeordnet ist.

2. Transportbehälter nach Anspruch 1, **dadurch gekennzeichnet, dass** die Mittel zum Verdampfen des Kühlmittels weiters eine Heizeinrichtung (15, 39) umfassen.

3. Transportbehälter nach Anspruch 1 oder 2, **dadurch gekennzeichnet, dass** die Heizeinrichtung (15, 39) sich durch das Trocknungsmittel (5, 34) erstreckende Heizschlangen umfasst.

4. Transportbehälter nach einem der Ansprüche 1 bis 3, **dadurch gekennzeichnet, dass** die das Trocknungsmittel (5, 34) und die Vorratskammer (6, 36) verbindende Leitung wenigstens einen mäanderförmigen Abschnitt aufweist, welcher als Kondensator (40) dient.

5. Transportbehälter nach einem der Ansprüche 1 bis 4, **dadurch gekennzeichnet, dass** in der Transportstrecke zum Transport des verdunsteten Kühlmittels zum Trocknungsmittel (5, 34) wenigstens ein Absperrorgan angeordnet ist.

6. Transportbehälter nach einem der Ansprüche 1 bis 5, **dadurch gekennzeichnet, dass** in der das Trocknungsmittel (5, 34) und die Vorratskammer (6, 36) verbindenden Leitung wenigstens ein Absperrorgan angeordnet ist.

7. Transportbehälter nach einem der Ansprüche 1 bis 6, **dadurch gekennzeichnet, dass** das Kühlelement gegenüber der Umgebung dampfdiffusionsdicht abgeschlossen ist.

8. Transportbehälter nach einem der Ansprüche 1 bis 7, **dadurch gekennzeichnet, dass** der Transportbehälter (16) weiters einen Latentwärmespeicher (2) umfasst, der mit der Kammer (9) in Wärmeaustauschverbindung steht.

9. Transportbehälter nach Anspruch 8, **dadurch gekennzeichnet, dass** die Kühlfläche (4) mit dem Latentwärmespeicher (2) und der Latentwärmespeicher (2) mit der Kammer (9) in Wärmeaustauschverbindung steht.

10. Transportbehälter nach Anspruch 8 oder 9, **dadurch gekennzeichnet, dass** der Latentwärmespeicher (2) zwischen der Kühlfläche (4) und der Kammer (9) angeordnet ist.

11. Transportbehälter nach Anspruch 8, 9 oder 10, **dadurch gekennzeichnet, dass** die Kühlfläche (4) und der Latentwärmespeicher (2) durch eine thermische Isolation voneinander getrennt sind.

12. Transportbehälter nach einem der Ansprüche 1 bis 11, **dadurch gekennzeichnet, dass** das Verdunstungselement (3, 22, 33) und das Trocknungsmittel (5, 34) durch eine thermische Isolation voneinander getrennt sind.

13. Transportbehälter nach einem der Ansprüche 1 bis 12, **dadurch gekennzeichnet, dass** die Transportstrecke wenigstens einen sich zwischen dem Verdunstungselement (3, 22, 33) und dem Trocknungsmittel (5, 34) erstreckenden Kanal (37) umfasst.

14. Transportbehälter nach Anspruch 12 oder 13, **dadurch gekennzeichnet, dass** die thermische Isolation zwischen dem Verdunstungselement (3, 22, 33) und dem Trocknungsmittel (5, 34) eine dampfdiffusionsoffene Isolationsschicht umfasst, welche die Transportstrecke ausbildet.

15. Transportbehälter nach einem der Ansprüche 8 bis 11, **dadurch gekennzeichnet, dass** der Latentwärmespeicher (2) eine Phasenübergangstemperatur von 3-10°C, insbesondere 5°C, aufweist.

16. Transportbehälter nach einem der Ansprüche 1 bis 15, **dadurch gekennzeichnet, dass** das Verdunstungselement (5, 34) ein das Kühlmittel, insbesondere Wasser, aufnehmendes Textil, insbesondere einen Filz, umfasst.

## Claims

1. A transport container for transporting temperature-sensitive transport goods comprising a chamber (9) for receiving the transport goods, an enclosure enclosing the chamber (9) and at least one cooling element for temperature control of the chamber (9), wherein the cooling element comprises:
- an evaporation element (3, 22, 33) with a cooling surface (4),
- a desiccant (5, 34) for receiving coolant evaporated in the evaporation element (3, 22, 33),
- a transport path for transporting the evaporated coolant to the desiccant (5, 34),
- a reservoir (6, 36) for the coolant which can be brought into fluid communication with the evaporation element (3, 22, 33),
wherein means are provided for evaporating the coolant stored in the desiccant (5, 34) and that the desiccant (5, 34) is connected to the reservoir for transporting the vaporized coolant to the reservoir (6, 36), **characterized in that** the means for evaporating the coolant comprise a vacuum pump (14), which is arranged in a line that connects the desiccant (5, 34) and the reservoir (6, 36).

2. A transport container according to claim 1, **characterized in that** the means for evaporating the coolant further comprise a heating device (15, 39).

3. A transport container according to claim 1 or 2, **characterized in that** the heating device (15, 39) comprises heating coils extending through the desiccant (5, 34).

4. A transport container according to any one of claims 1 to 3, **characterized in that** the line connecting the desiccant (5, 34) and the reservoir (6, 36) has at least one meandering portion, which serves as a condenser (40).

5. A transport container according to any one of claims 1 to 4, **characterized in that** at least one shut-off device is arranged in the transport path for transporting the evaporated coolant to the desiccant (5, 34).

6. A transport container according to any one of claims 4 to 5, **characterized in that** at least one shut-off device is arranged in the line connecting the desiccant (5, 34) and the reservoir (6, 36).

7. A transport container according to any one of claims 1 to 6, **characterized in that** the cooling element is sealed against the environment in a vapour diffusion tight manner.

8. A transport container according to any one of claims 1 to 7, **characterized in that** the transport container (16) further comprises a latent heat accumulator (2), which is in heat exchanging connection with the chamber (9).

9. A transport container according to claim 8, **characterized in that** the cooling surface (4) is in heat exchanging connection with the latent heat accumulator (2) and that the latent heat accumulator (2) is in heat exchanging connection with the chamber (9).

10. A transport container according to claim 8 or 9, **characterized in that** the latent heat accumulator (2) is arranged between the cooling surface (4) and the chamber (9) .

11. A transport container according to claim 8, 9 or 10, **characterized in that** the cooling surface (4) and the latent heat accumulator (2) are separated from each other by a thermal insulation.

12. A transport container according to any one of claims 1 to 11, **characterized in that** the evaporation element (3, 22, 33) and the desiccant (5, 34) are separated from each other by a thermal insulation.

13. A transport container according to any one of claims 1 to 12, **characterized in that** the transport path comprises at least one channel (37) extending between the evaporation element (3, 22, 33) and the desiccant (5, 34).

14. A transport container according to claim 12 or 13, **characterized in that** the thermal insulation between the evaporation element (3, 22, 33) and the desiccant (5, 34) comprises an insulating layer that is permeable to vapour diffusion and which forms the transport path.

15. A transport container according to any one of claims 8 to 11, **characterized in that** the latent heat accumulator (2) has a phase transition temperature of 3-10°C, in particular 5°C.

16. A transport container according to any one of claims 1 to 15, **characterized in that** the evaporation element (5, 34) comprises a textile, in particular a felt, receiving the coolant, in particular water.

## Revendications

1. Contenant de transport pour le transport de marchandises de transport sensibles à la température comprenant une chambre (9) pour la réception des marchandises de transport, une enveloppe entourant la chambre (9) et au moins un élément de refroidissement pour la régulation de la température de la chambre (9), dans lequel l'élément de refroidissement comporte :
- un élément d'évaporation (3, 22, 33) avec une surface de refroidissement (4),
- un moyen de séchage (5, 34) pour la réception d'un moyen de refroidissement évaporé dans l'élément d'évaporation (3, 22, 33),
- une voie de transport pour le transport du moyen de refroidissement évaporé au moyen de séchage (5, 34),
- une chambre de stockage (6, 36) pouvant être amenée avec l'élément d'évaporation (3, 22, 33) en liaison fluidique pour le moyen de refroidissement,
dans lequel des moyens pour l'évaporation du moyen de refroidissement stocké dans le moyen de séchage (5, 34) sont prévus et que le moyen de séchage (5, 34) est relié pour le transport du moyen de refroidissement évaporé à la chambre de stockage (6, 36) à celle-ci, **caractérisé en ce que** les moyens pour l'évaporation du moyen de refroidissement comportent une pompe à vide (14) qui est agencée dans une conduite reliant le moyen de séchage (5, 34) et la chambre de stockage (6, 36).

2. Contenant de transport selon la revendication 1, **caractérisé en ce que** les moyens pour l'évaporation du moyen de refroidissement comportent en outre un dispositif de chauffage (15, 39).

3. Contenant de transport selon la revendication 1 ou 2, **caractérisé en ce que** le dispositif de chauffage (15, 39) comporte des serpentins réchauffeurs s'étendant au travers du moyen de séchage (5, 34).

4. Contenant de transport selon l'une des revendications 1 à 3, **caractérisé en ce que** la conduite reliant le moyen de séchage (5, 34) et la chambre de stockage (6, 36) présente au moins une section en forme de méandre qui sert de condensateur (40).

5. Contenant de transport selon l'une des revendications 1 à 4, **caractérisé en ce qu'**au moins un organe de blocage est agencé dans la voie de transport pour le transport du moyen de refroidissement évaporé au moyen de séchage (5, 34).

6. Contenant de transport selon l'une des revendications 1 à 5, **caractérisé en ce qu'**au moins un organe de blocage est agencé dans la conduite reliant le moyen de séchage (5, 34) et la chambre de stockage (6, 36).

7. Contenant de transport selon l'une des revendications 1 à 6, **caractérisé en ce que** l'élément de refroidissement est fermé de manière étanche à la diffusion de la vapeur par rapport à l'environnement.

8. Contenant de transport selon l'une des revendications 1 à 7, **caractérisé en ce que** le contenant de transport (16) comporte en outre un accumulateur de chaleur latente (2) qui est en liaison d'échange thermique avec la chambre (9).

9. Contenant de transport selon la revendication 8, **caractérisé en ce que** la surface de refroidissement (4) est en liaison d'échange thermique avec l'accumulateur de chaleur latente (2) et l'accumulateur de chaleur latente (2) est en liaison d'échange thermique avec la chambre (9).

10. Contenant de transport selon la revendication 8 ou 9, **caractérisé en ce que** l'accumulateur de chaleur latente (2) est agencé entre la surface de refroidissement (4) et la chambre (9).

11. Contenant de transport selon la revendication 8, 9 ou 10, **caractérisé en ce que** la surface de refroidissement (4) et l'accumulateur de chaleur latente (2) sont séparés l'un de l'autre par une isolation thermique.

12. Contenant de transport selon l'une des revendications 1 à 11, **caractérisé en ce que** l'élément d'évaporation (3, 22, 33) et le moyen de séchage (5, 34) sont séparés l'un de l'autre par une isolation thermique.

13. Contenant de transport selon l'une des revendications 1 à 12, **caractérisé en ce que** la voie de transport comporte au moins un canal (37) s'étendant entre l'élément d'évaporation (3, 22, 33) et le moyen de séchage (5, 34).

14. Contenant de transport selon la revendication 12 ou 13, **caractérisé en ce que** l'isolation thermique entre l'élément d'évaporation (3, 22, 33) et le moyen de séchage (5, 34) comporte une couche d'isolation ouverte à la diffusion de vapeur qui réalise la voie de transport.

15. Contenant de transport selon l'une des revendications 8 à 11, **caractérisé en ce que** l'accumulateur de chaleur latente (2) présente une température de transition de phase de 3 à 10 °C, en particulier de 5 °C.

16. Contenant de transport selon l'une des revendications 1 à 15, **caractérisé en ce que** l'élément d'évaporation (5, 34) comporte un textile, en particulier un feutre, absorbant le moyen de refroidissement, en particulier de l'eau.
